# EUROPÄISCHE PATENTSCHRIFT

(11) **EP 3 646 679 B1**
(45) Veröffentlichungstag und Bekanntmachung des Hinweises auf die Patenterteilung: **11.08.2021**
(21) Anmeldenummer: 18731016.4
(22) Anmeldetag: 06.06.2018
(51) Int. Cl.: H05K 5/02, G06F 21/86, H05K 5/00

(54) **STEUEREINHEIT FÜR EIN FAHRZEUG UND VERWENDUNG DER STEUEREINHEIT**
CONTROL UNIT FOR A VEHICLE AND USE OF SAID CONTROL UNIT
UNITÉ DE COMMANDE POUR UN VÉHICULE ET UTILISATION DE LADITE UNITÉ DE COMMANDE

(30) Priorität: 26.06.2017 DE 102017210736
(43) Veröffentlichungstag der Anmeldung: 06.05.2020
(73) Patentinhaber: Continental Teves AG & Co. OHG, 60488 Frankfurt am Main (DE)
(72) Erfinder: HEISE, Andreas, 64390 Erzhausen (DE)
(74) Vertreter: Continental Corporation
(86) Internationale Anmeldenummer: PCT/EP2018/064886
(87) Internationale Veröffentlichungsnummer: WO 2019/001918

(56) Entgegenhaltungen:
- DE-A1-102008 006 959
- DE-U1-202012 007 236
- US-A1- 2015 339 568

## Beschreibung

Die Erfindung betrifft eine Steuereinheit für ein Fahrzeug nach Anspruch 1 sowie eine Verwendung der Steuereinheit in einem Fahrzeug nach Anspruch 9.

Elektronische Steuergeräte werden zum Beispiel in Kraftfahrzeugen mehr und mehr für sicherheitsrelevante Aufgaben (zum Beispiel Bremsvorgänge) genutzt. In vielen Fällen kann der Fahrer bei Fehlfunktion oder falscher Funktion eines Steuergeräts die gewünschte Aktion mit Muskelkraft durchführen oder die Situation oder durch Abschalten der Steuereinheit in den Griff bekommen. Bei autonomem Fahren vernetzt sich das Fahrzeug mit anderen Fahrzeugen bzw. Steuergeräten oder mit weiteren Datennetzwerken. Daten auf Bussystem derartiger Fahrzeuge werden daher verschlüsselt, um fremde Eingriffe mit höherer Sicherheit erkennen zu können.

Ein sensibler Punkt bleiben aber die Steuergeräte selber, bei denen eine Manipulation nach der Öffnung des Geräts möglich wird. Auch unsachgemäße Reparaturen bieten ein erhebliches Sicherheitsrisiko.

So ist aus der DE 20 2012 007 236 U1 ein Elektronikmodul mit einem Manipulationsschutz bekannt, umfassend eine Leiterplatte auf deren ersten Seite elektronische Bauteile einschließlich eines Mikrochips angeordnet sind und einen Gehäusedeckel, welcher der ersten Seite der Leiterplatte gegenüberliegt. Der Gehäusedeckel weist auf seiner Innenseite einen geschlossenen Rahmen auf, welcher sich bis zu der ersten Seite der Leiterplatte erstreckt und nur einen sicherheitsrelevanten Teilbereich umgibt, bspw. den Mikrochip. In das durch den inneren Rahmen eingeschlossene Volumen wird mit einem Gießharz vergossen. Das Gießharz wirkt als ein Manipulationsschutz in der Art und Weise, dass ein Abnehmen des Gehäusedeckels von der Leiterplatte nicht ohne weiteres möglich ist. Das Gießharz ist mit dem Rahmen und der Leiterplatte zusammenhängend verbunden. Beim Abnehmen des Gehäusedeckels wird die Leiterplatte beschädigt. Das Gießharz kann auch so vergossen werden, dass es sich unter dem Mikrochip befindet oder in die Windungen einer Spule eindringt. Beim Abnehmen des Gehäusedeckels würde der Mikrochip von Leiterplatte abgerissen oder die Spule würde beschädigt werden. Somit sind Sicherheitsmaßnahmen geschaffen, welche eine Manipulation des Elektronikmoduls verhindern sollen bzw. im Falle einer gewaltsamen Öffnung zu einer Beschädigung des Elektronikmoduls führen. Diese Art von Manipulationsschutz erfordert aber eine bestimmte Formgebung des Gehäuses und einen weiteren Verfahrensschritt, in welchem Gießharz in gezielter Menge eingelassen werden muss.

Die US 2015/0339568 A1 beschreibt einen RFID Tag umfassend eine Leiterplatte, welche einen fragilen Bereich umfasst. Dieser fragile Bereich wird beim Auslösen eines Manipulationsmechanismus abgebrochen. Die Manipulationsvorrichtung weist eine Leiterplattenhalterung auf, welche Teil einer Brechvorrichtung ist. In die Leiterplattenhalterung ist ein Teil des fragilen Bereichs der Leiterplatte aufgenommen. Der fragile Bereich der Leiterplatte wird durch Perforierung bewirkt. Dadurch wird eine Sollbruchstelle erzeugt, welche sicherstellt, dass die Leiterplatte vollständig bricht. Die Manipulationsvorrichtung wird auf eine Platte angebracht. Ein Federblock dient als ein Anker für einen Auslöser. Ein Gleitschlitten ist federvorgespannt. Beim Entriegeln des Auslösers gleitet der Schlitten gegen die Brechvorrichtung, wodurch diese weggedrückt bzw. verdreht wird. Da der fragile Bereich der Leiterplatte in der Brechvorrichtung aufgenommen ist, führt die Bewegung der Brechvorrichtung zu einem Abbrechen des fragilen Leiterplattenbereichs, wodurch die Leiterplatte beschädigt ist. Dieser Manipulationsmechanismus umfassend einen Auslöser und einen federvorgespannten Schlitten, wobei die Leiterplatte in einer extra vorgesehenen Brechvorrichtung aufgenommen ist und zudem noch eine Sollbruchstelle umfassen muss, stellt eine mechanisch sehr aufwendige Manipulationssicherung dar. Zudem beansprucht die gesamte Konstruktion viel Platz, welcher bei Steuereinheiten für Fahrzeuge prinzipiell kaum vorhanden ist.

Das Dokument DE 10 2008 006 959 A1 beschreibt eine Schaltungsplatine, wobei eine integrierte Schaltung, welche mit externen Kontakten auf der Schaltungsplatine befestigt ist, durch eine Abdeckung geschützt ist. Als Manipulationssicherung ist die Abdeckung irreversibel mit der Schaltungsplatine verbunden. Dies erfolgt dadurch, dass die Abdeckung eine Vielzahl an Stiften aufweist, welche durch Löcher in der Schaltungsplatine gesteckt werden. Die Verankerungsstifte sind auf verschiedenste Arten derart ausgeführt, dass beim Abnehmen des Deckels die Schaltungsplatine beschädigt bzw. zerstört wird. Insbesondere werden die Stifte derart platziert, dass Leiterbahnen unterbrochen werden. Zudem ist zu beachten, dass die Abdeckung eine hohe Festigkeit aufweist, damit diese nicht durchsägt oder durchbohrt werden kann. Diese Art der Manipulationssicherung erfordert, dass jeder sicherheitsrelevante Mikrochip mit einer Abdeckung versehen werden muss, wobei das Anbringen der Abdeckung zusätzliche aufwendige Verfahrensschritte in der Herstellung erfordert. Zudem muss die Abdeckung aus einem hochfesten Material gefertigt sein, was die Kosten in die Höhe treibt.

Es ist daher die Aufgabe der Erfindung, Steuergeräte gegen ein mechanisches Öffnen und die damit ermöglichte Manipulation an der Elektronik zu schützen und somit das daraus resultierende Sicherheitsrisiko zu reduzieren.

Die Aufgabe wird durch den unabhängigen Anspruch gelöst. Es wird eine Steuereinheit für ein Fahrzeug bereitgestellt, welche eine Leiterplatte umfasst, an der elektronische Bauteile angeordnet sind. Die Steuereinheit weist eine mechanische Manipulationssicherung auf, mittels welcher die Bauteile an der Leiterplatte und/oder die Leiterplatte selbst beschädigbar ist/sind. Die Beschädigung der Bauteile kann dabei alle Bauteile der Leiterplatte oder nur einen Teil der Bauteile der Leiterplatte und/oder die Leiterplatte selbst umfassen. Die Beschädigung ist in diesem Kontext derart zu verstehen, dass den Bauteilen ein Schaden zugefügt wird, welcher das ordnungsgemäße Funktionieren der Bauteile und somit einer Wiederinbetriebnahme verhindert. Besonders bevorzugt sind die Bauteile durch die Beschädigung zerstört und/oder nicht mehr funktionsfähig. Dadurch, dass die Bauteile auf der Leiterplatte nicht mehr funktionstüchtig sind, wird eine Manipulation von außen bei dem Versuch der Öffnung der Steuereinheit verhindert. Die Bauteile an der Leiterplatte können zum Beispiel als SMD-Bauteile ausgebildet sein.

Erfindungsgemäß umfasst die Manipulationssicherung mindestens eine Abschervorrichtung, wobei mittels der Abschervorrichtung die Bauteile an der Leiterplatte abscherbar sind. Eine Abschervorrichtung bietet vorteilhaft eine sehr einfache mechanische Lösung, welche relativ wenig Kosten und Aufwand bei der Montage und bezüglich des Materials verursacht.

Bevorzugt findet die Beschädigung der Bauteile durch die Manipulationssicherung zu dem Zeitpunkt statt, an welchem versucht wird, das Steuergerät von außen zu öffnen. Die durch das Steuergerät ausführbaren sicherheitsrelevanten Funktionen können dadurch von Dritten nicht manipuliert werden.

In einer bevorzugten Weiterbildung der Erfindung umfasst die Steuereinheit mehrere Gehäuseteile und mindestens eine Verschlusseinrichtung. Die Gehäuseteile sind mittels der Verschlusseinrichtung miteinander verbindbar, wobei außerdem eine Verbindung zwischen der Abschervorrichtung und der Verschlusseinrichtung besteht. Die Verbindung zwischen den mehreren Gehäuseteilen dichtet bevorzugt die Steuereinheit gegenüber der Umgebung (zum Beispiel Nässe, Schmutz) ab. Die Verschlusseinrichtung stellt die Verbindung zwischen den Gehäuseteilen her. Die Abschervorrichtung ist mit der Verschlusseinrichtung verbunden. Durch die Verbindung zwischen der Abschervorrichtung und der Verschlusseinrichtung wird eine direkte Beziehung zwischen beiden Bauteilen hergestellt, so dass die Abscherung der Bauteile vorteilhaft mit der Bewegung der Verschlusseinrichtung - und damit mit dem Lösen der Verbindung der Gehäuseteile - zusammenhängt. Bei dem Versuch, die Verbindung der Gehäuseteile zu lösen und damit die Steuereinheit zu öffnen, wird die Verschlusseinrichtung - und damit auch gleichzeitig die Abschervorrichtung - bewegt, so dass die Abschervorrichtung die Bauteile zerstört.

In einer bevorzugten Weiterbildung der Erfindung ist die Verschlusseinrichtung als Schraube ausgebildet. Die Schraube ist dabei zum Verbinden der Gehäuseteile durch die Leiterplatte hindurch schraubbar. Insbesondere wird die Schraube durch beide Gehäuseteile und die Leiterplatte geschraubt, wobei die Leiterplatte sich zwischen zwei Gehäuseteilen befindet. Die Abschervorrichtung und die Schraube, welche beide miteinander verbunden sind, sind derart angeordnet, dass die Abschervorrichtung beim Einschrauben der Schraube in die Leiterplatte an einem der Gehäuseteile abstützbar ist und beim Herausschrauben der Schraube aus der Leiterplatte die Bauteile an der Leiterplatte mittels der Abschervorrichtung abscherbar sind.

In einer bevorzugten Weiterbildung der Erfindung ist die Abschervorrichtung mit der Verschlusseinrichtung formschlüssig oder reibschlüssig verbunden. Eine reibschlüssige Verbindung kann beispielsweise als Presspassung ausgebildet sein. Dadurch ergibt sich eine feste Verbindung, welche die relative Position zwischen Abschervorrichtung und Verschlusseinrichtung im Wesentlichen beibehält, so dass ein Abscheren auch gegen den Widerstand der Bauteile möglich ist. Zudem ist die Verbindung durch eine derartige Ausbildung relativ einfach und kostengünstig.

In einer alternativen Weiterbildung der Erfindung ist die Abschervorrichtung mit Laschen versehen und die Verschlusseinrichtung weist einen Riffelungsbereich mit Riffeln auf. Die Laschen und die Riffelung sind ineinander verhakbar, so dass eine Verbindung zwischen der Abschervorrichtung und der Verschlusseinrichtung hergestellt werden kann. Auch diese Lösung stellt eine einfache mechanische Verbindung da, welche kostengünstig herzustellen ist. Bevorzugt wird bei dieser Ausführung die Riffelung an dem Schraubenkopf oder Schraubenschaft vorgesehen. Besonders bevorzugt gibt die Verbindung, insbesondere die Laschen, beim Einschrauben der Schraube elastisch nach, während die Verhakung zwischen Riffelung und Laschen sich beim Herausdrehen der Schraube ergibt.

In einer bevorzugten Weiterbildung der Erfindung umfasst die Manipulationssicherung eine Positionserkennungseinrichtung für die Abschervorrichtung, wobei mittels der Positionserkennungseinrichtung das Vorhandensein der Abschervorrichtung in der ordnungsgemäßen Position ermittelbar ist. Wenn ermittelt wird, dass die Abschervorrichtung sich in der ordnungsgemäßen Position befindet, ist davon auszugehen, dass keine Manipulation vorliegt. Besonders bevorzugt umfasst die Manipulationssicherung für jede der Abschervorrichtungen eine Positionserkennungseinrichtung. Bevorzugt ist die Positionserkennungsneinrichtung derart ausgebildet, dass sie einen Sensor oder eine Spule darstellt, welcher das Vorhandensein der Abschervorrichtung in der Sollage oder z.B. eine Schraube in der Sollage, detektieren kann. Dafür ist die Abschervorrichtung insbesondere ferromagnetisch ausgebildet. Falls mittels der Positionserkennungseinrichtung detektiert wird, dass die Abschervorrichtung nicht vorhanden ist oder ihre Position geändert hat, wird bevorzugt eine Sicherung vor Manipulation mittels Softwarefunktion vorgenommen. Dafür kann beispielsweise ein entsprechender Eintrag in einen Speicher erfolgen und/oder bestimmte Funktionen oder die gesamten Funktionen des Steuergeräts dauerhaft mittels Software außer Betrieb gesetzt werden (z.B. durch Löschen von Programmteilen) . So ist es bei einem Entfernen der Abschervorrichtung nicht möglich, das Steuergerät bzw. sicherheitsrelevante Funktionen zu manipulieren.

Alternativ kann durch die Positionserkennungseinrichtung erkannt werden, ob sich insbesondere die Position des Abscherarms (länglicher Teil) der Abschervorrichtung verändert hat oder es kann erkannt werden, ob die Verschlusseinrichtung (Schraube) an der ordnungsgemäßen Position vorhanden ist oder sich die Position geändert hat.

In einer bevorzugten Weiterbildung der Erfindung weist die Manipulationssicherung mindestens einen Kratzhaken auf, mittels denen mindestens eine Leiterbahn der Leiterplatte beschädigbar ist. Durch die Kratzhaken wird daher eine weitergehende Beschädigung bzw. Außer-Kraft-Setzen von Funktionen erlangt. Bevorzugt sind die Kratzhaken an ein oder mehreren Positionen der Abschervorrichtung derart angeordnet, dass sie in Richtung der Leiterplatte zeigen. Besonders bevorzugt ist die Manipulationssicherung dabei derart ausgebildet, dass genügend Druck auf die Kratzhaken ausgeübt wird, um die Leiterbahnen zu beschädigen.

In einer bevorzugten Weiterbildung der Erfindung kann die Schraube als Schlagschraube ausgebildet sein. Das Einschrauben zur Verbindung der Gehäuseteile erfolgt bevorzugt mittels Druckkraft. Die Verbindung zwischen den Abschervorrichtung und den Schrauben kann beispielsweise ebenfalls durch ein Verklemmen hergestellt sein. Die Schraube zieht sich beispielsweise über ihr Gewinde beim Einschrauben in die Abschervorrichtung, welche sich zum Beispiel an der Gehäusewand in radialer Richtung abstützt, und nimmt die Abschervorrichtung beim Drehen in der anderen Richtung rotatorisch mit, welches zur Zerstörung der Baugruppe führt. Bevorzugt weist die Schraube oder Schlagschraube einen breiten Schaftbereich auf, welcher den Bereich darstellt, indem die Verbindung zwischen der Schraube und der Abschervorrichtung besteht. Durch den breiteren Schaftbereich ist beispielsweise eine Presspassung mit der Abschervorrichtung möglich. Besonders bevorzugt sind die Schrauben, insbesondere der Kopf und der Schaftbereich, aus gehärtetem Stahl hergestellt, so dass ein Aufbohren oder Abdrehen des Schraubenkopfes erschwert wird.

Weitere bevorzugte Ausführungsformen ergeben sich aus den Unteransprüchen und der nachfolgenden Beschreibung von Ausführungsbeispielen anhand von Figuren.

Die Erfindung betrifft weiterhin die Verwendung einer zuvor beschriebenen Steuereinheit, wobei die Steuereinheit bevorzugt in einem Kraftfahrzeug eingesetzt wird. Dabei kann die Steuereinheit insbesondere für ein Steuern von Funktionen für elektronische Bremssysteme oder Fahrfunktionen ausgebildet sein.

In schematischer Darstellung zeigen:
- Fig. 1: ein Beispiel einer erfindungsgemäßen Steuereinheit mit einer Abschervorrichtung in Draufsicht auf eine Leiterplatte,
- Fig. 2: ein Beispiel einer erfindungsgemäßen Abschervorrichtung (hier z.B. mehrere Abschervorrichtungen in einem Gerät),
- Fig. 3: ein erfindungsgemäßes Ausführungsbeispiel einer Anordnung mehrerer Abschervorrichtungen in einer Draufsicht auf eine Leiterplatte sowie
- Fig. 4: eine beispielhafte Schnittdarstellung eines Teils der erfindungsgemäßen Steuereinheit und eine Detailansicht einer Schraube (mit Schaftbereich zur Klemmung an einer Abschervorrichtung).

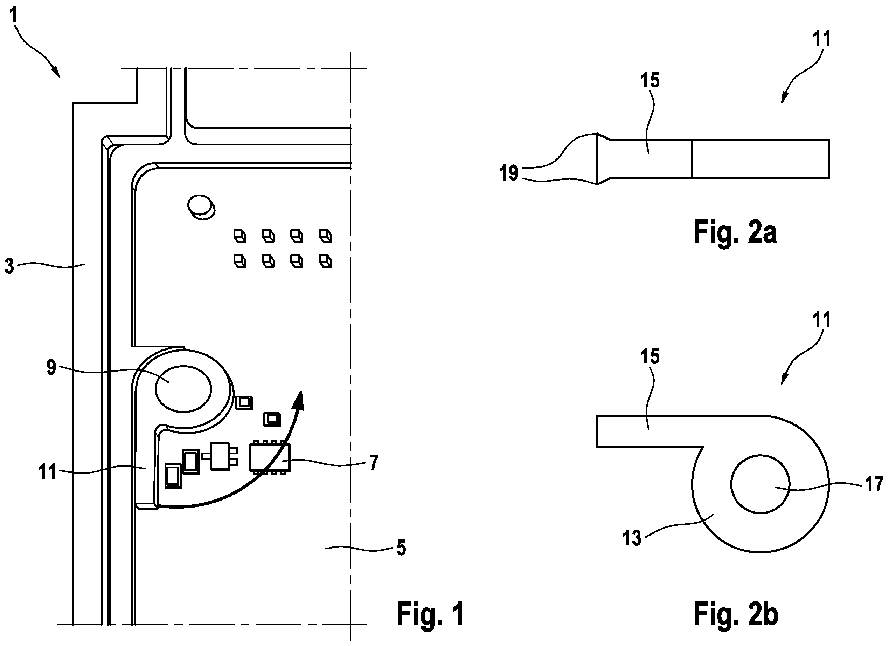

Figur 1 zeigt eine Draufsicht auf einen Teil einer erfindungsgemäßen Steuereinheit 1. Die Steuereinheit 1 ist hierbei in einem geöffneten Zustand (ohne Deckel und Schraubenkopf) dargestellt. Die Steuereinheit 1 umfasst einen Gehäuseteil 3 und eine Leiterplatte 5. Auf der Leiterplatte 5 sind elektronische Bauteile 7 angeordnet. Die Bauteile 7 können zum Beispiel als SMD-Bauteile ausgebildet sein. Bevorzugt sind sie fest mit der Leiterplatte 5 verbunden. Das Gehäuseteil 3 wird mit einem weiteren Gehäuseteil (Deckel, hier nicht dargestellt) verbunden, so dass die Steuereinheit 1 insgesamt gegen Nässe und Schmutz abgedichtet wird. Für diese Verbindung ist eine Verschlusseinrichtung 9 vorgesehen. Bevorzugt ist die Verschlusseinrichtung 9 als eine Schraube ausgebildet, welche durch die Gehäuseteile und die zwischen den Gehäuseteilen angeordnete Leiterplatte 5 geschraubt ist. Alternativ kann die Schraube auch nur durch die Gehäuseteile und nicht durch die Leiterplatte geschraubt werden.

Die erfindungsgemäße Steuereinheit 1 umfasst eine Manipulationssicherung, welche als Abschervorrichtung 11 ausgebildet ist. Die Manipulationssicherung kann entweder nur aus der Abschervorrichtung bestehen oder zusätzlich eine elektronische Positionserkennungseinrichtung (nicht dargestellt) umfassen, daher ist sie in den Figuren nicht mittels einer Bezugsziffer gekennzeichnet. Die Abschervorrichtung 11 ist im Detail in den Figuren 2A und 2B dargestellt, wobei die Figur 2A eine Seitenansicht der Abschervorrichtung 11 zeigt und die Figur 2B eine Draufsicht auf die Abschervorrichtung 11. Die Abschervorrichtung 11 weist einen kreisförmigen Teil 13 und einen länglichen Teil 15 auf, welche miteinander verbunden sind. Der kreisförmige Teil 13 der Abschervorrichtung 11 hat eine im Zentrum des Kreises angeordnete Ausnehmung 17, in welcher bei Montage auf die Leiterplatte ein Teil der Schraube 9 platziert ist. In Figur 2A ist eine weitere beispielsgemäße Ausführungsform der Abschervorrichtung 11 dargestellt, wobei diese Abschervorrichtung 11 Kratzhaken 19 aufweist. Die Kratzhaken 19 sind an dem Ende des länglichen Teils 15 angeordnet, welcher nicht mit dem kreisförmigen Teil 13 verbunden ist. Kratzhaken 19 sind somit bevorzugt am freien Ende des länglichen Teils 15 angeordnet. Bevorzugt ist zumindest ein Kratzhaken 19 vorgesehen, welcher an der Unterseite der Abschervorrichtung 11, also der Seite, welche an der Leiterplatte 5 auf liegt, angeordnet ist. Die Kratzhaken 19 können beispielsweise als dreieckige Elemente an dem länglichen Teil 15 vorgesehen sein. Besonders bevorzugt ist die Abschervorrichtung 11 aus einem Stück hergestellt und nicht aus mehreren Teilen zusammengesetzt.

Die Abschervorrichtung 11 ist derart angeordnet, dass sie mit dem länglichen Teil 15 an der Wand des Gehäuseteils 3 anliegt. Durch eine feste Verbindung zwischen der Abschervorrichtung 11 und der Schraube 9 wird beim Versuch, die Schraube 9 zu lösen, auch die Abschervorrichtung 11 bewegt. Diese Bewegung ist mit einem Pfeil markiert. Die Abschervorrichtung 11 bewegt sich somit mit ihrem länglichen Teil 15 gegen den Uhrzeigersinn über die Leiterplatte 5 und streift dabei die Bauteile 7. Die Bauteile 7 werden durch diese Bewegung beschädigt, insbesondere abgeschert. Dadurch wird ihnen ein Schaden zugefügt, welcher die Funktionsfähigkeit der Bauteile 7 verhindert. Dadurch, dass die Bauteile 7 durch diesen Vorgang nicht mehr ihre Aufgaben wahrnehmen können, kann auch keine Manipulation an der Steuereinheit 1 bzw. den Bauteilen 7 stattfinden. Mittels der Kratzhaken 19 kann zusätzlich eine tiefere Einkerbung in die Leiterplatte 5 erfolgen, so dass auch Leiterbahnen zerstört werden.

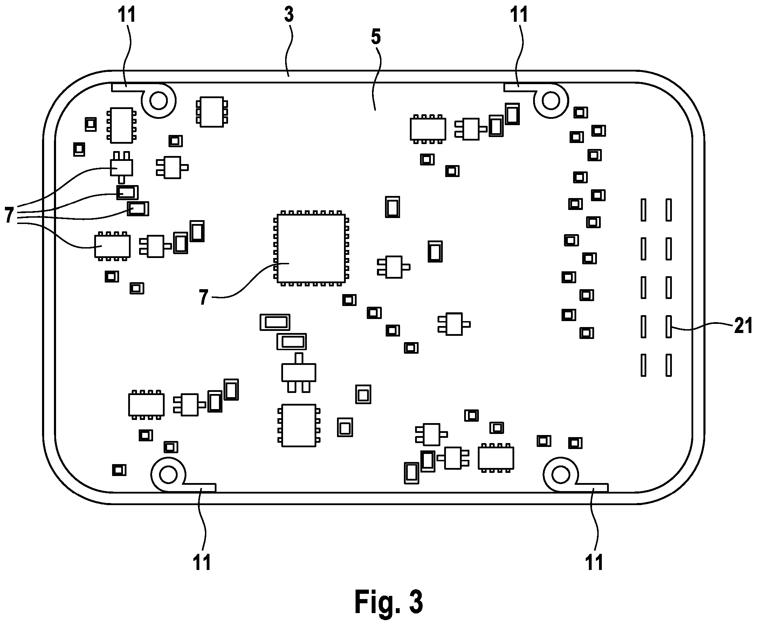

Figur 3 zeigt eine Draufsicht auf eine geöffnete Steuereinheit 1, wobei das Gehäuseteil 3 und die Leiterplatte 5 mit den Bauteilen 7 dargestellt ist. Dabei sind nur ein paar der dargestellten Bauteile auch als solche mit einem Bezugszeichen markiert. Zusätzlich können Steckerkontakte 21 vorgesehen sein. In dieser beispielhaften erfindungsgemäßen Steuereinheit 1 sind mehrere Abschervorrichtungen 11 auf der Leiterplatte 5 angeordnet. Beispielsgemäß sind vier Abschervorrichtungen 11 jeweils in der Nähe der Ecken des Gehäuseteils 3 bzw. der Leiterplatte 5 vorgesehen. Die Abscherung erfolgt natürlich nur in dem Radius, der durch die Länge des länglichen Teils 15 der Abschervorrichtung 11 vorgegeben ist.

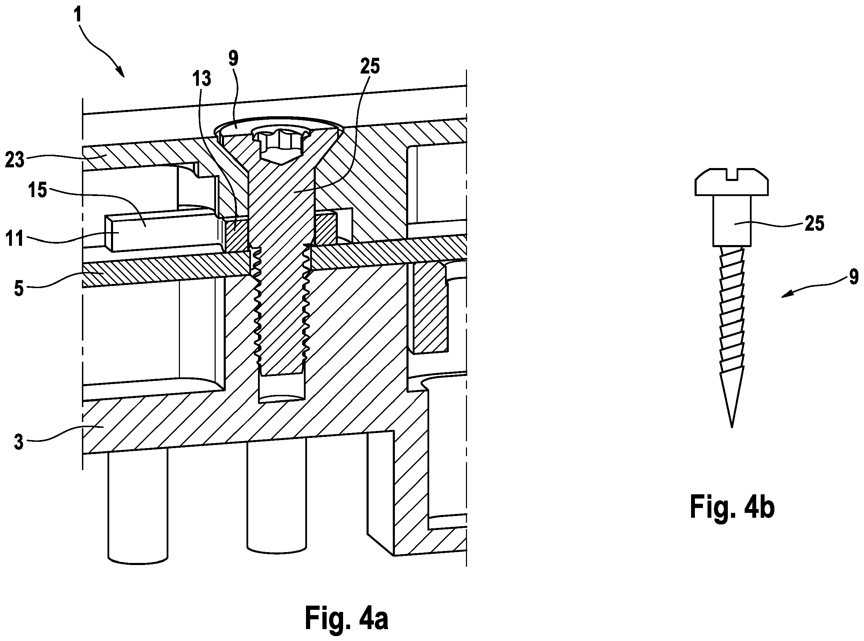

Figur 4A zeigt eine Seitenansicht der Steuereinheit 1 in Schnittdarstellung. In der Seitenansicht ist das Gehäuseteil 3 und ein weiteres Gehäuseteil 23 gezeigt, wobei zwischen den beiden Gehäuseteilen 3 und 23 die Leiterplatte 5 angeordnet ist. Das Gehäuseteil 3 und das weitere Gehäuseteil 23 werden zur Befestigung mittels einer Schraube 9 miteinander verbunden, wobei die Schraube 9 ausgehend von dem weiteren Gehäuseteil 23 durch die Leiterplatte 5 in das Gehäuseteil 3 geschraubt wird. Am Schaft der Schraube 25 ist eine Abschervorrichtung 11 befestigt. Die Schraube 9 wird durch die Ausnehmung 17 der Abschervorrichtung 11 geschraubt, so dass sich die Schraube 9 über ihr Gewinde 33 in das Material der Abschervorrichtung 11 zieht.

Alternativ ist die Verbindung zwischen dem Schraubenschaft 25 und der Abschervorrichtung 11 formschlüssig oder als Presspassung ausgebildet. Der Schraubenschaft 22 ist in der Ausnehmung des kreisförmigen Teils 13 der Abschervorrichtung 11 angeordnet. Wird die Schraube 9 gedreht, so dreht sich gleichzeitig auch die Abschervorrichtung 11, wobei der längliche Teil 15 über die Bauteile 7 schleift und diese abschert bzw. zerstört. In Figur 4B ist eine alternative Ausführungsform für die Schraube 9 dargestellt. In diesem Beispiel ist die Schraube 9 als Schlagschraube ausgebildet.

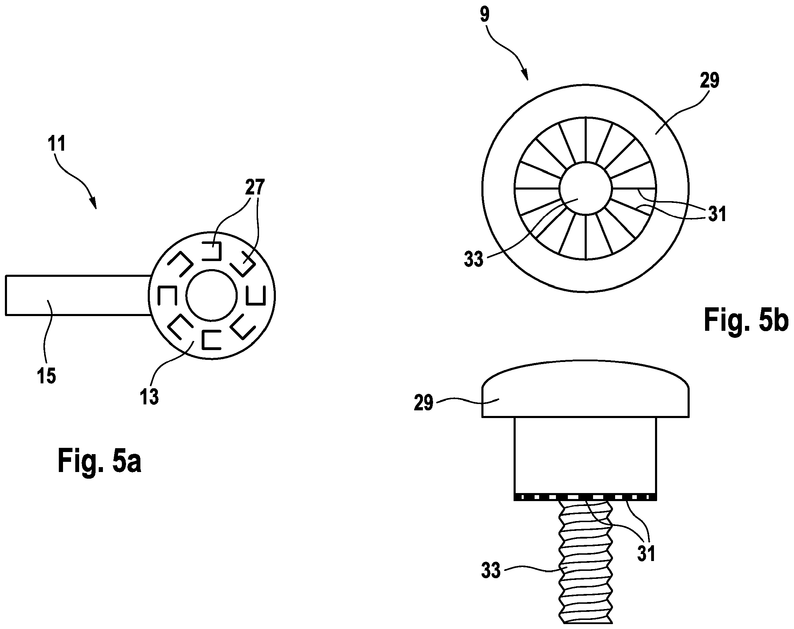

In Figur 5 ist eine alternative Verbindung zwischen Schraube 9 und Abschervorrichtung 11 dargestellt. Der kreisförmige Teil 13 der Abschervorrichtung 11 weist Laschen 27 auf, welche bevorzugt elastisch ausgebildet sind. Dies ist beispielhaft in Fig. 5A dargestellt. Im unteren Teil von Figur 5B ist eine Seitenansicht eines Teils der Schraube 9 dargestellt. An der Unterseite des Schraubenkopfes 29 ist ein Riffelungsbereich 31 vorgesehen, in welchem das Gewinde 33 der Schraube 9 endet. Der Riffelungsbereich 31 ist somit zwischen dem Gewinde 33 und dem Schraubenkopf 29 angeordnet. Der Riffelungsbereich 31 ist dabei bevorzugt eine Verlängerung des Schraubenkopfes 29 und weist somit dem Durchmesser des Teils der Schraubenkopfes 29 auf, welcher an dem Riffelungsbereich 31 anliegt. Der obere Teil der Figur 5B zeigt eine Schnittansicht der Schraube 9 an der Stelle des Riffelungsbereichs 31 mit Blickrichtung zum Schraubenkopf 29. Um den Durchmesser des Gewindes 33 herum ist der Riffelungsbereich 31 angeordnet, wobei außerhalb des Riffelungsbereichs der Überstand des Schraubenkopfes 29 sichtbar ist. In die Riffel des Riffelungsbereichs 31 sind die Laschen 27 der Abschervorrichtung 11 beim Lösen der Schraube einhakbbar bzw. verhakbar. Beim Eindrehen der Schraube 9 geben die Laschen 27 durch ihre Elastizität jedoch nach. Anders ausgedrückt kann ein Verschrauben der beiden Gehäuseteile 3, 23 ungehindert stattfinden, da die Laschen 27 sich beim Zusammenschrauben elastisch verhalten. Die Abschervorrichtung 11 stützt sich dabei an der Gehäuseaußenwand ab, so dass sich die Abschervorrichtung 11 nicht dreht. Beim Öffnen der Steuereinheit 1 bzw. beim Lösen der Schraube 9 zum Lösen der Verbindung zwischen den Gehäuseteilen 3, 23 verhaken sich die Laschen 27 der Abschervorrichtung 11 in den Riffeln des Riffelungsbereichs 31, so dass die Abschervorrichtung 11 mit der Schraube 9 mitgedreht wird und durch diese Bewegung die Bauteile 7 abschert bzw. die Leiterbahnen beschädigt.

### Bezugszeichenliste:

- 1: Steuereinheit
- 3: Gehäuseteil
- 5: Leiterplatte
- 7: Bauteile
- 9: Verschlusseinrichtung / Schraube
- 11: Abschervorrichtung
- 13: kreisförmiger Teil der Abschervorrichtung
- 15: länglicher Teil der Abschervorrichtung
- 17: Ausnehmung
- 19: Kratzhaken
- 21: Steckerkontakte
- 23: weiteres Gehäuseteil
- 25: Schaft der Schraube
- 27: Laschen
- 29: Schraubenkopf
- 31: Riffelungsbereich
- 33: Gewinde

## Patentansprüche

1. Steuereinheit (1) für ein Fahrzeug umfassend eine Leiterplatte (5), wobei an der Leiterplatte (5) elektronische Bauteile (7) angeordnet sind, wobei die Steuereinheit (1) eine mechanische Manipulationssicherung aufweist, mittels welcher einzelne oder mehrere Bauteile (7) an der Leiterplatte (5) und/oder die Leiterplatte (5) selbst beschädigbar ist/sind, **dadurch gekennzeichnet, dass** die Manipulationssicherung mindestens eine Abschervorrichtung (11) umfasst und mittels der Abschervorrichtung (11) die Bauteile an der Leiterplatte (5) abscherbar sind.

2. Steuereinheit (1) nach Anspruch 1, **dadurch gekennzeichnet, dass** die Bauteile (7) mittels der Manipulationssicherung derart beschädigbar sind, dass die Bauteile (7) nicht mehr funktionstüchtig sind.

3. Steuereinheit (1) nach Anspruch 1 oder 2, **dadurch gekennzeichnet, dass** die Steuereinheit (1) mehrere Gehäuseteile (3, 23) und mindestens eine Verschlusseinrichtung (9) umfasst, wobei die Gehäuseteile (3, 23) mittels der Verschlusseinrichtung (9) miteinander verbindbar sind, und wobei eine Verbindung zwischen der Abschervorrichtung (11) und der Verschlusseinrichtung (9) besteht.

4. Steuereinheit (1) nach Anspruch 3, **dadurch gekennzeichnet, dass** die Verschlusseinrichtung (9) als Schraube ausgebildet ist, wobei die Schraube (9) zum Verbinden der Gehäuseteile (3, 23) durch die Leiterplatte (5) hindurch schraubbar ist und wobei die Abschervorrichtung (11) mit der Schraube (9) derart angeordnet ist, dass die Abschervorrichtung (11) beim Einschrauben der Schraube (9) in die Leiterplatte (5) an einem der Gehäuseteile (3, 23) abstützbar ist und beim Herausschrauben der Schraube (9) aus der Leiterplatte (5) Bauteile (7) an der Leiterplatte (5) mittels der Abschervorrichtung (11) abscherbar sind.

5. Steuereinheit (1) nach Anspruch 3 oder 4, **dadurch gekennzeichnet, dass** die Abschervorrichtung (11) mit der Verschlusseinrichtung (9) formschlüssig oder reibschlüssig verbunden ist.

6. Steuereinheit (1) nach Anspruch 3 oder 4, **dadurch gekennzeichnet, dass** die Abschervorrichtung (11) Laschen (27) aufweist und die Verschlusseinrichtung (9) einen Riffelungsbereich (31) aufweist und die Laschen (27) für die Verbindung zwischen der Abschervorrichtung (11) und der Verschlusseinrichtung (9) in dem Riffelungsbereich (31) verhakbar sind.

7. Steuereinheit (1) nach einem der Ansprüche 1 bis 6, **dadurch gekennzeichnet, dass** die Manipulationssicherung eine Positionserkennungseinrichtung für die Abschervorrichtung (11) umfasst, wobei mittels der Positionserkennungseinrichtung das Vorhandensein und/oder eine Änderung der Position der Abschervorrichtung (11) ermittelbar ist.

8. Steuereinheit (1) nach einem der Ansprüche 1 bis 7, **dadurch gekennzeichnet, dass** die Abschervorrichtung (11) mindestens einen Kratzhaken (19) aufweist, mittels dem mindestens eine Leiterbahn der Leiterplatte (5) beschädigbar ist.

9. Verwendung einer Steuereinheit (1) nach einem der Ansprüche 1 bis 8 in einem Kraftfahrzeug, wobei die Steuereinheit (1) insbesondere als Steuereinheit für ein elektronisches Bremssystem oder für Fahrfunktionen ausgebildet ist.

## Claims

1. Control unit (1) for a vehicle comprising a circuit board (5), wherein electronic components (7) are arranged on the circuit board (5), wherein the control unit (1) has mechanical tamperproofing, by means of which individual components (7) or a plurality of components (7) on the circuit board (5) can be damaged and/or the circuit board (5) itself can be damaged, **characterized in that** the tamperpoofing comprises at least one shearing off device (11), and the components on the circuit board (5) can be sheared off by means of the shearing off device (11) .

2. Control unit (1) according to Claim 1, **characterized in that** the components (7) can be damaged by means of the tamperproofing in such a way that the components (7) are no longer functionally capable.

3. Control unit (1) according to Claim 1 or 2, **characterized in that** the control unit (1) comprises a plurality of housing parts (3, 23) and at least one closure device (9), wherein the housing parts (3, 23) can be connected to one another by means of the closure device (9), and wherein there is a connection between the shearing off device (11) and the closure device (9).

4. Control unit (1) according to Claim 3, **characterized in that** the closure device (9) is embodied as a screw, wherein the screw (9) can be screwed through the circuit board (5) in order to connect the housing parts (3, 23), and wherein the shearing off device (11) is arranged with the screw (9) in such a way that, when the screw (9) is screwed into the circuit board (5), the shearing off device (11) can be supported on one of the housing parts (3, 23), and, when the screw (9) is screwed out of the circuit board (5), components (7) on the circuit board (5) can be sheared off by means of the shearing off device (11) .

5. Control unit (1) according to Claim 3 or 4, **characterized in that** the shearing off device (11) is connected in a positively locking or frictionally locking fashion to the closure device (9).

6. Control unit (1) according to Claim 3 or 4, **characterized in that** the shearing off device (11) has clips (27), and the closure device (9) has a corrugated area (31), and the clips (27) for the connection between the shearing off device (11) and the closure apparatus (9) can be hooked into the corrugated area (31).

7. Control unit (1) according to one of Claims 1 to 6, **characterized in that** the tamperproofing comprises a position-detection apparatus for the shearing off device (11), wherein the presence of and/or a change in the position of the shearing off device (11) can be determined by means of the position-detection apparatus.

8. Control unit (1) according to one of Claims 1 to 7, **characterized in that** the shearing off device (11) has at least one scratching hook (19), by means of which at least one conductor track of the circuit board (5) can be damaged.

9. Use of a control unit (1) according to one of Claims 1 to 8 in a motor vehicle, wherein the control unit (1) is embodied in particular as a control unit for an electronic brake system or for driving functions.

## Revendications

1. Unité de commande (1) destinée à un véhicule comprenant une carte de circuit imprimé (5), des composants électroniques (7) étant disposés sur la carte de circuit imprimé (5), l'unité de commande (1) comportant une protection mécanique contre les manipulations à l'aide de laquelle un ou plusieurs composants (7) sur la carte de circuit imprimé (5) peuvent être endommagés et/ou la carte de circuit imprimé (5) elle-même peut être endommagée, **caractérisée en ce que** la protection contre les manipulations comprend au moins un dispositif de cisaillement (11) et les composants sur la carte de circuit imprimé (5) peuvent être cisaillés à l'aide du dispositif de cisaillement (11).

2. Unité de commande (1) selon la revendication 1, **caractérisée en ce que** les composants (7) peuvent être endommagés à l'aide de la protection contre les manipulations de telle sorte que les composants (7) ne soient plus en état de fonctionner.

3. Unité de commande (1) selon la revendication 1 ou 2, **caractérisée en ce que** l'unité de commande (1) comprend plusieurs parties de boîtier (3, 23) et au moins un moyen de fermeture (9), les parties de boîtier (3, 23) pouvant être reliées les unes aux autres à l'aide du moyen de fermeture (9), et une liaison étant présente entre le dispositif de cisaillement (11) et le moyen de fermeture (9).

4. Unité de commande (1) selon la revendication 3, **caractérisée en ce que** le moyen de fermeture (9) est réalisé sous forme de vis, la vis (9) pouvant être vissée à travers la carte de circuit imprimé (5) pour relier les parties de boîtier (3, 23) et le dispositif de cisaillement (11) pourvu de la vis (9) étant disposé de telle sorte que le dispositif de cisaillement (11) puisse être en appui sur l'une des parties de boîtier (3, 23) lorsque la vis (9) est vissée dans la carte de circuit imprimé (5) et les composants (7) sur la carte de circuit imprimé (5) étant cisaillés à l'aide du dispositif de cisaillement (11) lorsque la vis (9) est dévissée de la carte de circuit imprimé (5).

5. Unité de commande (1) selon la revendication 3 ou 4, **caractérisée en ce que** le dispositif de cisaillement (11) est relié au moyen de fermeture (9) par complémentarité de formes ou par friction.

6. Unité de commande (1) selon la revendication 3 ou 4, **caractérisée en ce que** le dispositif de cisaillement (11) comporte des pattes (27) et le moyen de fermeture (9) comporte une région ondulée (31) et les pattes (27) peuvent être accrochées dans la région ondulée (31) pour réaliser la liaison entre le dispositif de cisaillement (11) et le moyen de fermeture (9).

7. Unité de commande (1) selon l'une des revendications 1 à 6, **caractérisée en ce que** la protection contre les manipulations comprend un moyen de détection de position du dispositif de cisaillement (11), la présence et/ou un changement de position du dispositif de cisaillement (11) pouvant être déterminés à l'aide du dispositif de détection de position.

8. Unité de commande (1) selon l'une des revendications 1 à 7, **caractérisée en ce que** le dispositif de cisaillement (11) comporte au moins un crochet racleur (19) à l'aide duquel au moins une piste conductrice du circuit imprimé (5) peut être endommagée.

9. Utilisation d'un boîtier de commande (1) selon l'une des revendications 1 à 8 dans un véhicule automobile, l'unité de commande (1) étant conçue en particulier comme une unité de commande d'un système de freinage électronique ou de fonctions de conduite.
